(19) **Europäisches Patentamt**
**European Patent Office**
**Office européen des brevets**

(11) **EP 4 372 648 A1**

(12) **EUROPEAN PATENT APPLICATION**

(43) Date of publication:
**22.05.2024 Bulletin 2024/21**

(21) Application number: **22207500.4**

(22) Date of filing: **15.11.2022**

(51) International Patent Classification (IPC):
**G06Q 10/087** *(2023.01)* **G06Q 30/0202** *(2023.01)*

(52) Cooperative Patent Classification (CPC):
**G06Q 10/087; G06Q 30/0202**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bayer Consumer Care AG**
**4052 Basel (CH)**

(72) Inventors:
• **HAHAN, Nils**
**51373 Leverkusen (DE)**

• **KACHALA, Mikhail**
**51373 Leverkusen (DE)**
• **RIBAS, Maria Fernandez**
**08970 Sant Juan Despi (ES)**
• **WATZKE, Alexander**
**51373 Leverkusen (DE)**
• **WEICK, Daniel**
**4052 Basel (CH)**

(74) Representative: **BIP Patents**
**c/o Bayer Intellectual Property GmbH**
**Alfred-Nobel-Straße 50**
**40789 Monheim am Rhein (DE)**

(54) **ASSIGNING PRODUCTS TO STORES**

(57) Systems, methods, and computer programs disclosed herein relate to the assignment of products to stores.

Fig. 3 (a)

## Description

FIELD

Systems, methods, and computer programs disclosed herein relate to the assignment of products to stores.

BACKGROUND

As a rule, the sales space and/or floor space and/or storage space for products in a store is limited. A store owner cannot include as many products in his/her assortment as he/she would like.

Therefore, many store owners wonder which products they should include in their assortment.

Store owners are often represented by a sales representative who advise the store owner on product offers, possible discounts and benefits of the product assortment available. Generally, the representative is also responsible for collecting the order from the store owner and ensuring their desired products reach their store.

Typically, a store owner and/or or sales representatives selects such products that customers prefer to buy. The wishes and needs of customers can be determined through marketing and/or consumer studies. Such marketing and/or consumer studies are usually complex and expensive. Moreover, such marketing and/or consumer studies usually take into account general factors that determine customers' buying behavior, but not factors that are specific to a particular store. So, there is a need for a solution that allows a store owner to be made aware of products that his/her customers are most likely to buy and/or to identify products that he should offer that will maximize his potential for supplying the right products and driving additional benefits to his store, such as higher sales generated.

SUMMARY

This is achieved by the subject matter of the independent claims of the present disclosure. Preferred embodiments are defined in the dependent claims, the description, and the drawings.

Therefore, in a first aspect, the present disclosure relates to a computer-implemented method comprising the steps:

- receiving and/or providing a data set, the data set comprising store data, location data, product data, sales data, and environmental data for each store of a plurality of stores,
- generating at least one numerical representation for each store based on the data set,
- receiving a selection, the selection comprising a selected store of the plurality of stores,
- identifying reference stores within the plurality of stores that have a defined similarity to the selected store, based on the at least one numerical representations of the stores,
- identifying at least one product that is or was sold by at least one reference store that is not or was not sold by the selected store,
- outputting information about the at least one product.

In another aspect, the present disclosure provides a computer system comprising:

a processor; and

a memory storing an application program configured to perform, when executed by the processor, an operation, the operation comprising:

- receiving and/or providing a data set, the data set comprising store data, location data, product data, sales data, and environmental data for each store of a plurality of stores,
- generating at least one numerical representation for each store based on the data set,
- receiving a selection, the selection comprising a selected store of the plurality of stores,
- identifying reference stores within the plurality of stores that have a defined similarity to the selected store, based on the at least one numerical representations of the stores,
- identifying at least one product that is or was sold by at least one reference store that is not or was not sold by the selected store,
- outputting information about the at least one product.

In another aspect, the present disclosure provides a non-transitory computer readable storage medium having stored thereon software instructions that, when executed by a processor of a computer system, cause the computer system to execute the following steps:

- receiving and/or providing a data set, the data set comprising store data, location data, product data, sales data, and environmental data for each store of a plurality of stores,
- generating at least one numerical representation for each store based on the data set,
- receiving a selection, the selection comprising a selected store of the plurality of stores,
- identifying reference stores within the plurality of stores that have a defined similarity to the selected store, based on the at least one numerical representations of the stores,
- identifying at least one product that is or was sold by at least one reference store that is not or was not sold by the selected store,
- outputting information about the at least one product.

DETAILED DESCRIPTION

The invention will be more particularly elucidated below without distinguishing between the aspects of the invention (method, computer system, computer-readable storage medium). On the contrary, the following elucidations are intended to apply analogously to all the aspects of the invention, irrespective of in which context (method, computer system, computer-readable storage medium) they occur.

If steps are stated in an order in the present description or in the claims, this does not necessarily mean that the invention is restricted to the stated order. On the contrary, it is conceivable that the steps can also be executed in a different order or else in parallel to one another, unless one step builds upon another step, this absolutely requiring that the building step be executed subsequently (this being, however, clear in the individual case). The stated orders are thus preferred embodiments of the present disclosure.

As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The present disclosure provides means for assigning one or more products to a store.

A store usually includes one or more rooms or areas where products are stored and offered for sale. Usually but not necessarily, the products are offered for sale to end customers.

In one embodiment of the present disclosure, the store is a pharmacy, and the products are pharmaceuticals and/or other products usually sold by pharmacies. Preferably, the products are over the counter (OTC) products.

Many examples in the present disclosure relate to pharmacies and products sold by pharmacies. However, this should not be understood to limit the present invention to pharmacies as stores and pharmacy products as products. The present invention applies to all types of stores and products, and the examples in this disclosure relating to pharmacies and pharmacy products may also be applied to other stores and products.

In a first step, a data set is received and/or provided. The term "receive data" means accept, retrieve, and/or obtain data from one or more sources. The term "providing data" means extracting and/or calculating and/or determining and/or reading data and/or loading data (e.g., into a (working) memory).

The data set comprises, for each store of a plurality of stores, store data, location data, product data, sales data, and environmental data. "Plurality" means more than 10, preferably more than 100, even more preferably more than 1000. The data set may comprise additional data.

Store data is data that characterizes the store. Store data can comprise:

- name of the store and/or any other identifier to uniquely identify a store
- type of name (e.g., named after the owner, named after a retail chain, named after the location)
- affiliation with a retail chain
- type of store (e.g., self-service or operation by service personnel)
- sales area
- opening times
- image(s) of the store (e.g., exterior view, interior view)
- textual descriptions of the interior and/or exterior of the store
- categories assigned to the store based on rule logics (e.g., buying, occasional buying, non-buying, goods receiving, etc.),
- sales representative assessment (potential)
- categories based on the information provided by the store owner (e.g., contact and product category preferences)

Location data is data on the location of the store. Location data can comprise:

- address of the store (e.g., country and/or state and/or region and/or city and/or street and/or building)
- type of location (e.g., inner-city location or urban location or location in a pedestrian zone or in a fringe area of a city or in a suburb area or in a rural area)
- geocoordinates of the store
- type of stores in the neighborhood of the store
- presence of parking spaces and/or number of parking spaces
- connection to public transport
- distance to the nearest doctor's office / hospital / nursing home
- number of doctor's offices / hospitals / nursing homes within a defined radius around the store

Product data is data about the products offered and/or sold by the store. Product data may comprise:

- number of different products / product groups offered for sale
- name of products
- active ingredient(s) contained a product (in case of pharmaceutical products)
- type of products (e.g., pain reliever, contraceptives, vitamins and/or other nutritional supplements, cold remedies, body care, skin creams, etc.)
- dosage form (e.g., ointments, tablets, syrups, suppositories)
- product hierarchy (e.g., Aspirin -> headache remedy -> pain reliever)
- package size
- prescription/non-prescription medicament
- producer
- distributor
- generic product/originator product
- price at which a product is offered

Sales data provide information about the number of products that have been sold in a defined period of time. These can be absolute numbers and/or (e.g., arithmetically averaged) mean values. Preferably, sales data is available for each individual product. Preferably, sales data is available for periods of one week or two weeks or one month or one quarter or a year. Preferably, sales data is available for each past month of the past 6, 12, 18, 24, 30 or 36 months. Sales data may include the revenue and/or profit that has been generated from products.
Environmental data provides information about the store's surroundings and/or the environmental conditions at the store's location and/or in the vicinity of the store. Environmental data may comprise data pertaining to one or more points in time (e.g., each day at 12 noon) and/or one or more time periods (e.g., in the form of one or more average values over the one or more time periods).
Environmental data can comprise weather data.
Environmental data can comprise:

- mean (e.g., arithmetically averaged) and/or maximum and/or minimum air temperature and/or air temperature(s) at a pre-defined point in time (e.g., outdoors at a height of 1 meter above the ground)
- mean (e.g., arithmetically averaged) and/or maximum and/or minimum air pressure and/or air pressure(s) at a pre-defined point in time (e.g., outdoors at a height of 1 m above the ground)
- mean (e.g., arithmetically averaged) and/or maximum and/or minimum humidity and/or humidity(ies) at a pre-defined point in time (e.g., outdoors at a height of 1 m above the ground)
- air pollution data (e.g., concentration of carbon dioxide and/or ozone and/or nitrogen oxides in the air and/or number of particles in a pre-defined volume)
- data on pollen in the air (e.g., type of pollen, concentration of pollen in the air),
- data on precipitation (e.g., type of precipitation, amount)
- number of hours of sunshine in a defined period of time (e.g., as an average value per day averaged over a month)

The data set can comprise further data such as demographic data. Demographic data is data about people living and/or working in the vicinity of the store (e.g., within a radius of 1 km or more). These people are potential or actual customers of the store and therefore information about them can be useful for product identification/assignment. Demographic data can comprise:

- age (e.g., mean age of women and/or men and/or proportion of women and/or men in an age period (e.g., for age periods: 0 to 18, 19 to 25, 25 to 30, 30 to 40, 40 to 50, 50 to 60, 60n to 70, 70 to 80, over 80 and/or any other age periods)
- earnings (e.g., medium earnings)
- education level
- ethnicity
- buying preferences of the surrounding population in terms of certain categories (e.g., "healthy lifestyle" and/or "natural products")

In a preferred embodiment, the data set comprises, for each store of the plurality of stores, one or more satellite images and/or one or more images generated by an (unmanned or manned) aerial vehicle of the location of the store and/or its neighborhood.
In such an image, for example, a portion of the earth's surface can be imaged in a top view from a height of, for example, 100 meters or higher with an extent of 100 meters to 5 kilometers or more in two mutually perpendicular directions (e.g., along the north-south axis and along the east-west axis), with the imaged portion of the earth's surface comprising the store.
The image(s) may have been captured with one or more camera sensors that include one or more visible light, infrared light, and/or ultraviolet light image sensors.
Much of the data mentioned here can be obtained from commercial providers. Other data can be obtained through interviews and/or questionnaires from store owners and/or from sales representatives.
The data set can be obtained, at least partially, from one or more databases. The one or more databases may be databases that are a part of the computer system of the present disclosure, and/or may be a part of at least one other computer system that may be connected to the computer system of the present disclosure, for example, via a network.

The data set can be, at least partially, inputted by a user.

For each store of the plurality of stores, one or more numerical representations are generated.

The one or more numerical representations characterize and/or represent the store by numbers. These numbers can be in the form of a feature vector, for example.

A "feature vector" is an n-dimensional vector of numerical features that represent an object or a subject (in the present case a store), wherein n is an integer greater than 1, usually greater than 100. The term "feature vector" shall also include matrices, tensors, and the like.

Usually, each dimension of the feature vector represents one feature. However, it is also possible that several dimensions represent one feature. The value of a dimension represents a feature value. For example, a feature can be a postal code of a store address. The feature value is then the corresponding postal code of the respective store under consideration.

Some of the above mentioned data in the data set is not available in numeric form, such as the country or the city where the store is located. These data have to be put into a numeric form. For example, arbitrary numbers can be assigned for such categorical parameters. For example, the number 1 can represent a first country (e.g., Switzerland), the number 2 a second country (e.g., Germany) and so on. Additionally and/or alternatively, one-hot-encodings can be used to turn a categorial parameter into a numerical representation. One-hot encoding is a method to quantify categorical data. In short, this method produces a vector with length equal to the number of categories in the data set. If a data point belongs to the $i^{th}$ category then components of this vector are assigned the value 0 except for the $i^{th}$ component, which is assigned a value of 1. A store in Berlin would therefore have a 1 in the city_berlin column, while any store not in Berlin would have a 0.

This also applies analogously to products. Numbers and/or one-hot-encodings can also be assigned for products and/or product types and/or product groups and/or levels in a product hierarchy.

Images such as satellite imagery and images captured by a drone comprise a comparatively large amount of data. For example, an image with a resolution of 512 pixels x 512 pixels encoded in RGB color space has 512 x 512 x 3 = 786432 numerical values alone for the representation of the pixels.

For comparatively large data sets such as images, feature extraction can be performed to reduce the amount of data.

"Feature extraction" is a process of dimensionality reduction by which an initial set of data is reduced to more manageable groups for processing. Feature extraction starts from the initial set of data and builds derived values (features) intended to be informative and non-redundant. A characteristic of these initial data sets is a comparably large number of variables that require a lot of computing resources to process. Feature extraction is the name for methods that select and/or combine variables into features, effectively reducing the amount of data that must be processed, while still accurately and completely describing the initial data set.

In a preferred embodiment, an artificial neural network is used for feature extraction. An artificial neural network (ANN) is a biologically inspired computational model. An ANN usually comprises at least three layers of processing elements: a first layer with input neurons (nodes), a $k^{th}$ layer with at least one output neuron (node), and $k$-2 inner (hidden) layers, where $k$ is an integer greater than 2.

In such a network, the input neurons serve to receive the input data (e.g., an image). The output neurons serve to output data such as a feature vector. The processing elements of the layers are interconnected in a predetermined pattern with predetermined connection weights therebetween. Each network node can represent a calculation of the weighted sum of inputs from prior nodes and a non-linear output function. The combined calculation of the network nodes relates the inputs to the outputs.

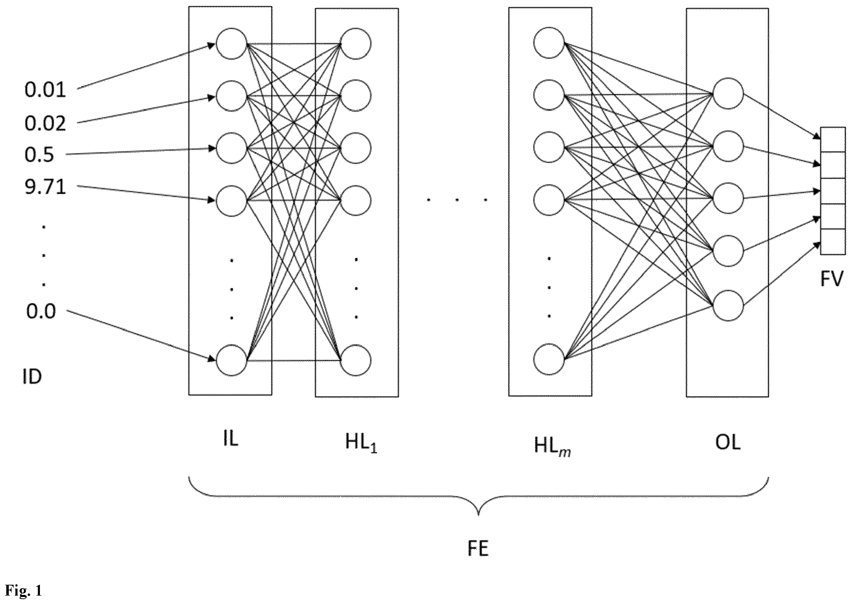

Fig. 1 shows schematically by way of example a feature extraction network. The feature extraction network FE comprises an input layer IL, a number m of hidden layers $HL_1$ to $HL_m$ and an output layer. The input neurons of the input layer IL serve to receive input data ID, such as an image. The output neurons serve to output a feature vector FV.

The neurons of the input layer IL and the hidden layer $HL_1$ are connected by connection lines having a connection weight, and the neurons of the hidden layer $HL_m$ and the output layer are also connected by connection lines with a connection weight. Similarly, the neurons of the hidden layers are connected to the neurons of neighboring hidden layers in a predetermined manner (not shown in Fig. 1). The connection weights can be learned through training of the network.

In a preferred embodiment of the present invention, one or more feature extraction networks used for feature extraction are or comprise a convolutional neural network (CNN).

A CNN is a class of deep neural networks that comprises an input layer with input neurons, an output layer with at least one output neuron, as well as multiple hidden layers between the input layer and the output layer. The hidden layers of a CNN typically comprise filters (convolutional layer) and aggregation layers (pooling layer) which are repeated alternately and, at the end, one layer or multiple layers of completely connected neurons (dense/fully connected layer(s)).

One example of a CNN that can be used for feature extraction in images is resnet-18. ResNet-18 is a convolutional neural network that is 18 layers deep.

Pretrained versions of the network trained on more than a million images from the ImageNet database (see, e.g., http://www.image-net.org) are available (see, e.g.: https://github.com/pytorch/vision/blob/main/torchvision/models/resnet.py). Such a pretrained network can classify images into a multitude of object categories. As a result, the network has learned feature representations for a wide range of images.

In other words, by pre-training based on annotated images, where the artificial neural network can be trained to classify the images, for example, the network learns to generate feature vectors from the images that adequately represent the image (at least with respect to the task of classification) with less data.

The encoder of a trained autoencoder can also be used for feature extraction.

An autoencoder is usually used to learn efficient data encodings in an unsupervised manner. In general, the aim of an autoencoder is to learn a representation (encoding) for a set of data, typically for dimensionality reduction, by training the autoencoder to ignore "noise". Along with the reduction side (encoder), a reconstructing side (decoder) is learnt, where the autoencoder tries to generate from the reduced encoding a representation as close as possible to its original input. A key feature of an autoencoder is an information bottleneck between the encoder and the decoder. This bottleneck, a continuous fixed-length vector (a feature vector), causes the machine learning model to learn a compressed representation that captures the most statistically salient information in the data.

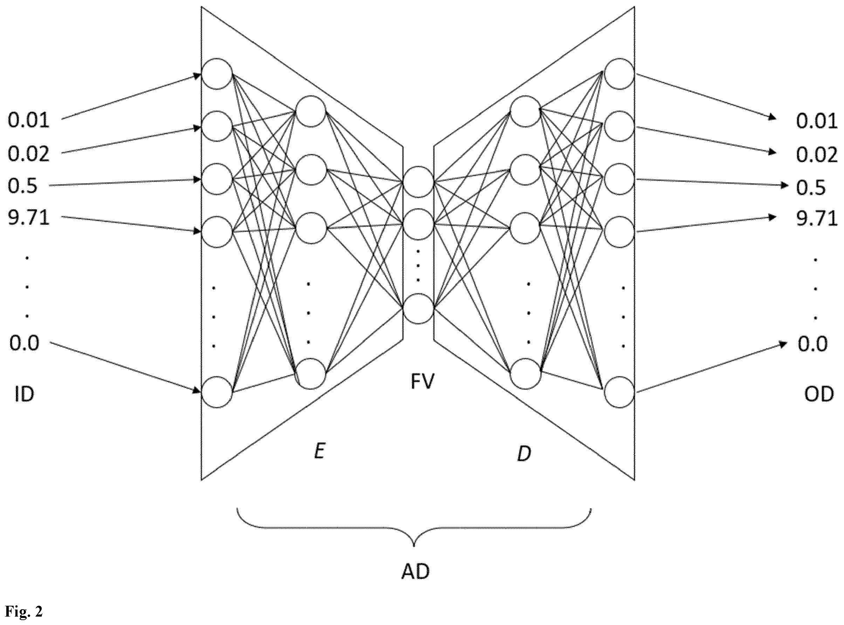

Fig. 2 shows schematically an autoencoder. The autoencoder AD comprises an encoder E and a decoder D. The task of the encoder E is to generate a compressed representation FV (a feature vector) of the input data ID fed into the encoder. The decoder D has the task to reconstruct the input data from the feature vector FV, i.e., to generate output data OD which are as close as possible to the input data ID.

In the training of the autoencoder the output data are compared with the input data. A loss function can be used to quantify deviations between the output data and the input data. Parameters of the autoencoder can be modified in an optimization procedure (e.g., in a gradient descent procedure) to reduce the deviations, for example to a defined minimum. Once the autoencoder is trained, the encoder can be used to determine feature vectors for new input data.

Further details about autoencoders and the generation of compressed representations can be found in various publications (see e.g., D. Bank *et al*.: *Autoencoders,* arXiv:2003.05991).

A feature vector generated by a (pre-)trained network/autoencoder for an image typically has a size in the order of 512 dimensions. To further reduce such a feature vector, a principal component analysis can be performed, for example, and the feature vector can be reduced to a vector comprising a number of, for example, 3 to 20 or more principal components.

In addition to or instead of principal component analysis and/or a similar feature reduction, the feature vectors of images (e.g., the satellite images of the various stores) can also be clustered using cluster analysis. Each cluster can be assigned a number and each image can be represented, at least proportionally, by the cluster number.

In a preferred embodiment, each store is represented by several, i.e., at least two, preferably at least 12 feature vectors. For example, it is possible to generate a feature vector for each store for each month of the past 12 months. The corresponding feature vector then represents the store in a particular month, such as in January or in February or in March and so on.

Such a month-by-month representation has the advantage that temporal influences on the sale of products can be taken into account. For example, in winter, when colds are more common, different medicines are sold than in spring, when allergies caused by pollen are more common, or in summer, when sunburn is more likely.

In addition to or instead of generating feature vectors for defined time periods, feature vectors for product groups and/or product types can also be generated. This allows targeted products in a specific area (e.g., in a defined product group, such as pain relievers) to be viewed.

In a preferred embodiment, features of the feature vectors are weighted. With such a weighting, features that have a greater influence on the sales figures of a product or several products (e.g., the products of a product group) can be given a higher weight than features that have a lesser influence on the sales figures.

The influence of a feature one, e.g., sales figures can be determined, for example, by means of a correlation analysis.

For example, it is possible to train a predictive model to predict sales figures based on features. Such a task can be solved with a gradient boosting method (e.g., using XGBoost: https://xgboost.readthedocs.io/). Once the prediction model is trained, the importance of the individual features (also called attributes) in predicting sales figures can be determined. The determination of feature importance from a predictive model is described, for example, in: https://machinelearningmastery.com/feature-importance-and-feature-selection-with-xgboost-in-python/.

The features can be ranked according to their importance for prediction. The feature with the highest importance can be assigned the highest weight factor (e.g., the value 1) and the feature with the lowest importance can be assigned the lowest weight factor (e.g., the value 0) and the features between the most and least important feature can be assigned a value according to their rank in the order. Other methods of assigning weight factors to features are also possible.

Once at least one feature vector has been generated for each store of the plurality of stores, the set of feature vectors can be stored and used to identify at least one product for a selected store.

A next step is the selection of a store.

The selection is usually made by a user. The selection may be made by user input into the computer system of the present disclosure. The user may select a store from a list of stores and/or select a store by entering an identifier (e.g., the name of the store).

However, it is also possible that the selection is made automatically, for example, according to predefined criteria and/or or criteria specified by a user.

It is also possible that several stores are selected.

The selection is received from the computer system of the present disclosure.

A store that is selected from the plurality of stores is referred to as a selected store in this description. The selected store is represented by a numerical representation (e.g., a feature vector).

In a further step, reference stores within the plurality of stores are identified. A reference store is a store with a pre-defined similarity to the selected store. Each reference store is represented by a numerical representation (e.g., a feature vector).

Usually, a number of reference stores are identified that are most similar to the selected store. In other words, all other stores that are not identified reference stores are less similar to the selected store than the reference stores. For example, the number of identified reference stores may be 1, 2, 3, 4, 5, 6, 7, 8, 9 or 10 or more.

Similarity between stores can be expressed by the similarity of their numerical representations (feature vectors). In other words, to check how similar two stores are, one can check how similar their numerical representations (feature vectors) are.

A measure of the similarity of two vectors can be, for example, a similarity value, such as the cosine similarity, or a distance measure, such as the Euclidean distance, the Manhattan distance, Chebyshev distance, Minkowski distance, weighted Minkowski distance, Mahalanobis distance, Hamming distance, Canberra distance, Bray Curtis distance, or a combination thereof.

A distance d(X, Y) between a first feature vector X and a second feature vector Y can be converted into a similarity value s(X, Y), e.g., by the following equation:

$$s(X, Y) = \frac{1}{1 + d(X, Y)}$$

An example of a distance measure between two feature vectors X = ($x_1$, $x_2$, ..., $x_n$) and Y = ($y_1$, $y_2$, ..., $y_n$) is the Manhattan distance: $d(X, Y) = \sum_{i=1}^{n} |x_i - y_i|$

Another example of a distance measure between two feature vectors X = ($x_1$, $x_2$, ..., $x_n$) and Y = ($y_1$, $y_2$, ..., $y_n$) is the Euclidean distance:

$$d(X, Y) = \sqrt{\sum_{i=1}^{n} (x_i - y_i)^2}$$

Another example of a distance measure between two feature vectors X = ($x_1$, $x_2$, ..., $x_n$) and Y = ($y_1$, $y_2$, ..., $y_n$) is the Minkowski diatnce of order *p*:

$$d(X, Y) = \left(\sum_{i=1}^{n} |x_i - y_i|^p\right)^{\frac{1}{p}}$$

wherein *p* is an integer. For *p* = 1, the Minkowksi distance corresponds to the Manhattan distance; for *p* = 2, the Minkowksi distance corresponds to the Euclidean distance.

To identify those reference stores that are most similar to the selected store, a similarity or distance value can be determined between the feature vector of the selected store and the feature vector of any other store of the plurality of stores. Those reference stores can then be identified for which the distance value is the smallest or for which the similarity measure is the largest.

It is also possible to determine the similarity values or distance values that are above or below a pre-defined threshold. This is explained by the example of a similarity value which is always positive and takes the value 1 (or 100%) if two feature vectors are identical and takes the value 0 if two feature vectors have no similarity: For example, the pre-defined threshold may be 0.8 or 0.85 or 0.9 or 0.91 or 0.95 or 0.99 or some other value.

Likewise, it is possible to structure the feature vectors of the plurality of stores using a ball tree method. A ball tree structure facilitates the identification of nearest neighbors (i.e., reference stores that are similar to a selected store).

A ball tree is a binary tree in which every node defines an n-dimensional hypersphere, or ball, containing a subset of the points to be searched. Each internal node of the tree partitions the data points into two disjoint sets which are associated with different balls. While the balls themselves may intersect, each point is assigned to one or the other ball in the partition according to its distance from the ball's center. Each leaf node in the tree defines a ball and enumerates all data points inside that ball. Each node in the tree defines the smallest ball that contains all data points in its subtree. This gives rise to the useful property that, for a given test point t outside the ball, the distance to any point in a ball B in the tree is greater than or equal to the distance from t to the surface of the ball.

An important application of ball trees is expediting nearest neighbor search queries, in which the objective is to find the k points in the tree that are closest to a given test point by some distance metric (e.g. Euclidean distance). A simple search algorithm, sometimes called KNS1, exploits the distance property of the ball tree. In particular, if the algorithm is searching the data structure with a test point t, and has already seen some point p that is closest to t among the points encountered so far, then any subtree whose ball is further from t than p can be ignored for the rest of the search.

More details on ball tree methods can be found in the scientific literature, see, e.g.: M. Dolatshah et al.: Ball∗-tree: Efficient spatial indexing for constrained nearest-neighbor search in metric spaces, arXiv: 1511.00628.

Thus, using a ball tree method, a number of reference stores can be identified based on the feature vectors that have a defined similarity to a selected store, e.g., those reference stores that are most similar to the selected store. In addition to ball tree methods, there are other methods that can be used to identify nearest neighbors in data structures see, e.g.: M. R. Abbasifard et al.: A Survey on Nearest Neighbor Search Methods. International Journal of Computer Applications, 2014, 95, 39-52.

If multiple feature vectors are available for each store, the identification of one or more reference stores with a predefined similarity to a selected store can be based on specific feature vectors.

For example, if a user is interested in knowing which products are most frequently purchased by customers in January, he or she can identify reference stores based on feature vectors generated for the time period of January (for example, the last past January).

If a user is interested in which products in the pain relievers product group are particularly frequently purchased by customers, he or she can make an identification of reference stores based on feature vectors generated for the pain relievers product group.

If a user is interested in which hay fever remedies are most frequently purchased by customers, he or she can identify reference stores based on feature vectors generated for the product group of hay fever remedies and/or the time period in which hay fever usually occurs (e.g., springtime).

Once one or more reference stores are identified, products sold by the one or more reference stores can be compared to products sold by the selected store. For example, those products that are sold at the at least one reference store with a high sales number (e.g., a sales number that is above a pre-defined threshold) but are not sold at the selected store can be identified. If such products are sold by a similar store with a high number of sales, then it is very likely that it will also be sold in the selected store with a high number of sales.

But there can also be other strategies to identify a product. It does not necessarily have to be a matter of identifying those products with which the highest sales figures and/or the highest profit can be achieved.

Products can be identified according to other criteria, for example, those products can be identified with which customers were most satisfied and/or which are particularly environmentally friendly and/or are produced sustainably and/or come from the region and/or are available quickly and/or have a particularly high shelf life.

Products can also be identified based on multiple criteria.

If one or more products have been identified for one or more reference stores based on one or more pre-defined criteria, it can be checked whether the respective product is already offered by the selected store or not. If not, it can be added to the assortment of the selected store. If so, another product can be identified and/or another reference store can be viewed.

The one or more identified products may be displayed to a user (e.g., on a screen), output to a printer, stored in a data storage device, and/or transmitted to a separate computer, e.g., over a network.

It is also possible that an order for the at least one identified product is initiated to supply the selected store with the at least one identified product.

Such an order may be transmitted to the manufacturer and/or distributor of the at least one identified product. Such an order typically includes the name of the at least one identified product and/or another unique identifier, the quantity of the product to be delivered, and a delivery address.

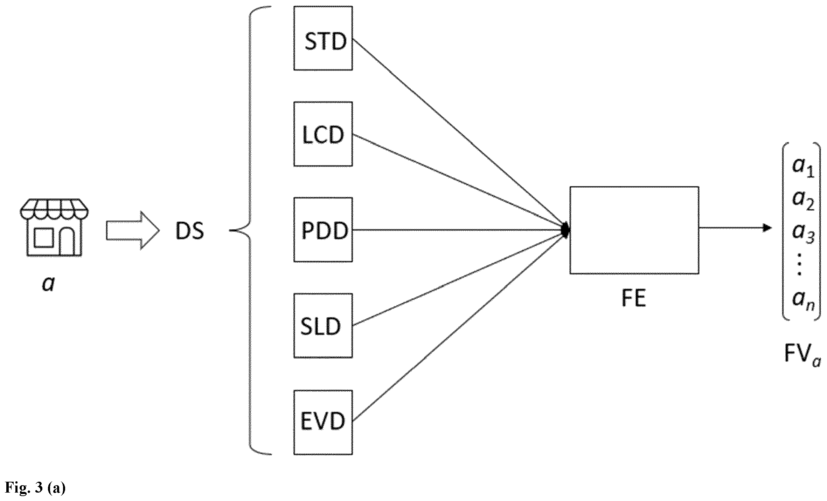

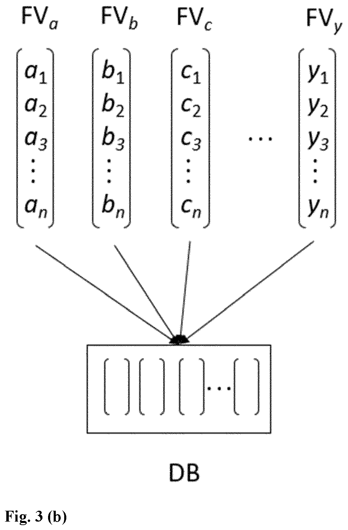

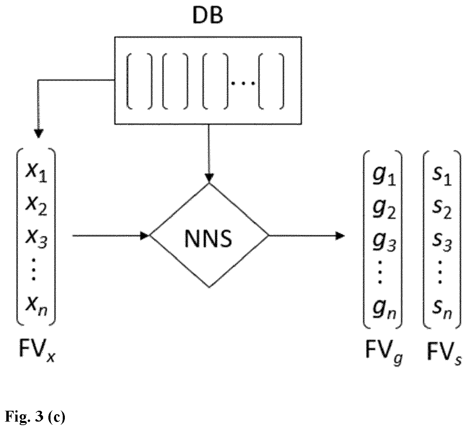

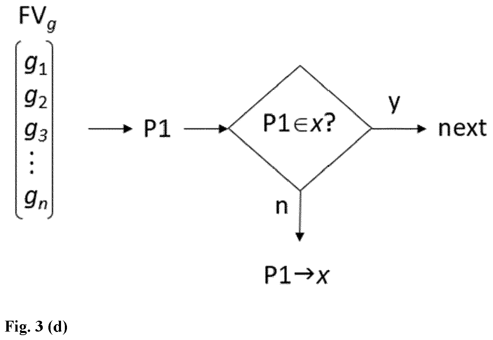

Fig. 3 illustrates an embodiment of the method of the present disclosure for assigning one or more products to a store.

A first step of the method is shown in Fig. 3 (a). Fig. 3 (a) shows a store a. A data set DS characterizing the store a exists for this store. The data set DS includes store data STD, location data LCD, product data PDD, sales data SLD, and environmental data EVD. The data set DS may comprise further data.

Based on the data set DS, a feature vector $FV_a$ is generated, which characterizes the store a. The feature vector $FV_a$ is a numerical representation of the store a. Generating the feature vector $FV_a$ may include extracting one or more features from the store data STD, location data LCD, product data PDD, sales data SLD, environmental data EVD and/or further data (if present). A feature extraction unit FE, e.g., an artificial neural network, can be used for feature extraction. As described, several feature vectors can be generated for one store.

The generation of one or more feature vectors is performed not only for one store but for a plurality of stores. In Fig. 3(b), it is shown that a plurality of feature vectors $FV_a$, $FV_b$, $FV_c$, ..., $FV_y$ representing the stores a, b, c, ..., y are stored in a data memory DB.

In a next step, a store x is selected. In Fig. 3(c), it is shown that the feature vector $FV_x$ representing the selected store x is read from the data memory DB. Based on this feature vector $FV_x$ and the other feature vectors stored in the data memory DB, a nearest neighbor search NNS is performed. The result is two feature vectors $FV_g$ and $FV_s$ that are most similar to the feature vector $FV_x$. The feature vector $FV_g$ represents store g, and the feature vector $FV_s$ represents store s.

Fig. 3(d) shows that a product PI has been identified for store g. This can be, for example, a product with high sales figures.

The next step is to check if the product P1 is already offered by the store x ($P1 \in x$?). In case the product PI is not yet offered for sale in the store x (n), it is assigned to the store x (P1→x). In case the product P1 is already offered for sale in the store x (y), another product offered in the store g can be identified and/or a product in another store (for example store s) can be identified, and the check can be repeated for the other product (next).

The operations in accordance with the teachings herein may be performed by at least one computer system specially constructed for the desired purposes or general-purpose computer system specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the invention.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

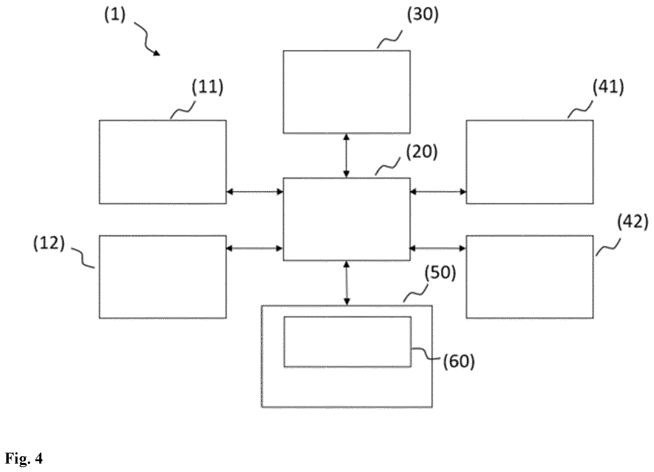

Fig. 4 illustrates a computer system (1) according to some example implementations of the present disclosure in more detail. The computer may include one or more of each of a number of components such as, for example, processing unit (20) connected to a memory (50) (e.g., storage device).

The processing unit (20) may be composed of one or more processors alone or in combination with one or more memories. The processing unit is generally any piece of computer hardware that is capable of processing information such as, for example, data, computer programs and/or other suitable electronic information. The processing unit is composed of a collection of electronic circuits some of which may be packaged as an integrated circuit or multiple interconnected integrated circuits (an integrated circuit at times more commonly referred to as a "chip"). The processing unit may be configured to execute computer programs, which may be stored onboard the processing unit or otherwise stored in the memory (50) of the same or another computer.

The processing unit (20) may be a number of processors, a multi-core processor or some other type of processor, depending on the particular implementation. Further, the processing unit may be implemented using a number of heterogeneous processor systems in which a main processor is present with one or more secondary processors on a single chip. As another illustrative example, the processing unit may be a symmetric multi-processor system containing multiple processors of the same type. In yet another example, the processing unit may be embodied as or otherwise include one or more ASICs, FPGAs or the like. Thus, although the processing unit may be capable of executing a computer program to perform one or more functions, the processing unit of various examples may be capable of performing one or more functions without the aid of a computer program. In either instance, the processing unit may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces (41, 42) and/or one or more user interfaces (11, 12, 30). The communications interface(s) (41, 42) may be configured to transmit and/or receive information, such as to and/or from other computer(s), network(s), database(s) or the like. The communications interface(s) (41, 42) may be configured to transmit and/or receive information by physical (wired) and/or wireless communications links. The communications interface(s) (41, 42) may include interface(s) to connect to a network, such as using technologies such as cellular telephone, Wi-Fi, satellite, cable, digital subscriber line (DSL), fiber optics and the like. In some examples, the communications interface(s) (41, 42) may include one or more short-range communications interfaces configured to connect devices using short-range communications technologies such as NFC, RFID, Bluetooth, Bluetooth LE, ZigBee, infrared (e.g., IrDA) or the like. The communications interfaces (41, 42) may further include one or more interfaces for communicating with peripherals such as printers and the like.

The user interfaces (11, 12, 30) may include a display (30). The display (30) may be configured to present or otherwise display information to a user, suitable examples of which include a liquid crystal display (LCD), light-emitting diode display (LED), plasma display panel (PDP) or the like. User input interface(s) (11, 12) may be wired or wireless, and may be configured to receive information from a user into the computer system (1), such as for processing, storage and/or display. Suitable examples of user input interfaces (11,12) include a microphone, image or video capture device, keyboard or keypad, joystick, touch-sensitive surface (separate from or integrated into a touchscreen) or the like. In some examples, the user interfaces (11, 12, 30) may include automatic identification and data capture (AIDC) technology for machine-readable information. This may include barcode, radio frequency identification (RFID), magnetic stripes, optical character recognition (OCR), integrated circuit card (ICC), and the like.

As indicated above, program code instructions may be stored in memory, and executed by processing unit that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

**Claims**

1. A computer-implemented method comprising the steps:

> • receiving and/or providing a data set, the data set comprising store data, location data, product data, sales data, and environmental data for each store of a plurality of stores,
> • generating at least one numerical representation for each store based on the data set,
> • receiving a selection, the selection comprising a selected store of the plurality of stores,
> • identifying reference stores within the plurality of stores that have a defined similarity to the selected store, based on the at least one numerical representations of the stores,

- identifying at least one product that is or was sold by at least one reference store that is not or was not sold by the selected store,
- outputting information about the at least one product.

2. The method according to claim 1,

wherein store data comprises: name of the store and/or any other identifier to uniquely identify a store, type of name, affiliation with a retail chain, type of store, sales area, opening times and/or image(s) of the store;
wherein location data comprises: address of the store, type of location, geocoordinates of the store, type of stores in the neighborhood of the store, presence of parking spaces and/or number of parking spaces, connection to public transport and/or distance to the nearest doctor's office, hospital and/or nursing home;
wherein product data comprises: number of different products and/or product groups offered for sale, name of products, type of products, dosage form, product hierarchy, package size, producer, distributor and/or price at which a product is offered;
wherein sales data provides information about a number of products that have been sold in a defined period of time;
wherein environmental data provides information about the store's surroundings and/or the environmental conditions at the store's location and/or in the vicinity of the store.

3. The method according to claim 1 or 2, wherein the data set comprises further data, wherein the further data comprises demographic data, wherein demographic data is data about people living and/or working in the vicinity of the store.

4. The method according to any one of claims 1 to 3, wherein more than one numerical representation is generated for each store, preferably, a numerical representation is generated for each month of the past twelve months.

5. The method according to any one of claims 1 to 4, wherein the data set comprises one or more satellite images and/or one or more images generated by an unmanned and/or manned aerial vehicle of the location of the store and/or its neighborhood.

6. The method according to claim 5, wherein one or more feature vectors are generated for one or more images within the data set using feature extraction, wherein the one or more feature vectors are generated using a trained machine learning model.

7. The method according to claim 6, wherein the trained machine learning model is or comprises a convolutional neural network.

8. The method according to claim 6 or 7, wherein a principal component analysis is performed on the basis of the feature vectors, wherein a number of principal components is added as additional features to the respective numerical representation of each store.

9. The method according to any one of claims 6 to 8, wherein a cluster analysis is performed on the basis of the feature vectors, wherein information to which cluster an image belongs is added as another feature to the respective numerical representation of each store.

10. The method according to any one of claims 1 to 9, wherein features of the numerical representations are weighted by weighting factors, the weighting factors indicating the importance of a feature for predicting sales numbers on the basis of the numerical representation.

11. The method according to any one of claims 1 to 10, wherein identifying reference stores comprises:

- determining a similarity value and/or a distance value for a pair consisting of the numerical representation of the selected store and the numerical representation of a reference store.

12. The method according to claim 11, wherein similarity values for the numerical representations of the reference stores are greater than the similarity values for the numerical representations of the other stores and/or the distance values for the numerical representations of the reference stores are smaller than the distance values for the numerical representations of the other stores.

13. The method according to any one of claims 1 to 12, wherein each store is a pharmacy and/or products offered for sale by each store comprise pharmaceutical products.

14. The method according to any one of claims 1 to 13, further comprising:

- initiating an order for the at least one identified product to supply the selected store with the at least one identified product.

15. A computer system comprising:

a processor; and
a memory storing an application program configured to perform, when executed by the processor, an operation, the operation comprising:

• receiving and/or providing a data set, the data set comprising store data, location data, product data, sales data, and environmental data for each store of a plurality of stores,

• generating at least one numerical representation for each store based on the data set,

• receiving a selection, the selection comprising a selected store of the plurality of stores,

• identifying reference stores within the plurality of stores that have a defined similarity to the selected store, based on the at least one numerical representations of the stores,

• identifying at least one product that is or was sold by at least one reference store that is not or was not sold by the selected store,

• outputting information about the at least one product.

16. A non-transitory computer readable storage medium having stored thereon software instructions that, when executed by a processor of a computer system, cause the computer system to execute the following steps:

• receiving and/or providing a data set, the data set comprising store data, location data, product data, sales data, and environmental data for each store of a plurality of stores,

• generating at least one numerical representation for each store based on the data set,

• receiving a selection, the selection comprising a selected store of the plurality of stores,

• identifying reference stores within the plurality of stores that have a defined similarity to the selected store, based on the at least one numerical representations of the stores,

• identifying at least one product that is or was sold by at least one reference store that is not or was not sold by the selected store,

• outputting information about the at least one product.

Fig. 1

Fig. 2

Fig. 3 (a)

Fig. 3 (b)

Fig. 3 (c)

$FV_g$

$$\begin{pmatrix} g_1 \\ g_2 \\ g_3 \\ \vdots \\ g_n \end{pmatrix}$$

P1 → P1∈$x$? → y → next

n → P1→$x$

**Fig. 3 (d)**

Fig. 4

Europäisches
Patentamt

European
Patent Office

Office européen
des brevets

# EUROPEAN SEARCH REPORT

Application Number

EP 22 20 7500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 012060 A (PANASONIC IP MAN CORP) 17 January 2022 (2022-01-17) * abstract * * paragraph [0006] – paragraph [0272] * ----- | 1–16 | INV. G06Q10/087 G06Q30/0202 |
| A | US 2021/035127 A1 (MANNA SOURIT [IN] ET AL) 4 February 2021 (2021-02-04) * abstract * * paragraph [0017] – paragraph [0061] * ----- | 1–16 | |
| A | US 2020/202368 A1 (PALMER DANIEL BRUCE [US]) 25 June 2020 (2020-06-25) * abstract * * paragraph [0012] – paragraph [0096] * ----- | 1–16 | |

TECHNICAL FIELDS
SEARCHED      (IPC)

G06Q

The present search report has been drawn up for all claims

| Place of search | Date of completion of the search | Examiner |
|---|---|---|
| The Hague | 20 April 2023 | Lozza, Mario |

EPO FORM 1503 03.82 (P04C01)

## ANNEX TO THE EUROPEAN SEARCH REPORT
## ON EUROPEAN PATENT APPLICATION NO.

EP 22 20 7500

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2023

| Patent document cited in search report | | Publication date | Patent family member(s) | | Publication date |
|---|---|---|---|---|---|
| JP 2022012060 | A | 17-01-2022 | NONE | | |
| US 2021035127 | A1 | 04-02-2021 | US | 2020027099 A1 | 23-01-2020 |
| | | | US | 2021035127 A1 | 04-02-2021 |
| | | | WO | 2020018321 A1 | 23-01-2020 |
| US 2020202368 | A1 | 25-06-2020 | US | 2020202368 A1 | 25-06-2020 |
| | | | WO | 2019046257 A1 | 07-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. DOLATSHAH et al.** Ball∗-tree: Efficient spatial indexing for constrained nearest-neighbor search in metric spaces. *arXiv: 1511.00628*

- **M. R. ABBASIFARD et al.** A Survey on Nearest Neighbor Search Methods. *International Journal of Computer Applications,* 2014, vol. 95, 39-52